# EUROPÄISCHE PATENTSCHRIFT

(11) **EP 1 646 520 B1**
(45) Veröffentlichungstag und Bekanntmachung des Hinweises auf die Patenterteilung: **03.10.2007**
(21) Anmeldenummer: 04738888.9
(22) Anmeldetag: 08.07.2004
(51) Int. Cl.: B60J 7/02

(54) **TARGADACHSYSTEM FÜR EIN FAHRZEUG SOWIE FAHRZEUG**
TARGA ROOF SYSTEM FOR VEHICLE AND ASSOCIATED VEHICLE
SYSTEME DE TOIT TARGA POUR VEHICULE ET VEHICULE ASSOCIE

(30) Priorität: 12.07.2003 DE 10331625
(43) Veröffentlichungstag der Anmeldung: 19.04.2006
(73) Patentinhaber: Wilhelm Karmann GmbH, 49084 Osnabrück (DE)
(72) Erfinder: BUNSMANN, Winfried, 49143 Bissendorf (DE); HESELHAUS, Udo, 49479 Ibbenbüren (DE)
(86) Internationale Anmeldenummer: PCT/DE2004/001472
(87) Internationale Veröffentlichungsnummer: WO 2005/007432

(56) Entgegenhaltungen:
- EP-A2- 0 261 379
- DE-A1- 10 032 378
- DE-A1- 19 503 786

## Beschreibung

Die Erfindung betrifft ein Targadachsystem für ein Fahrzeug sowie ein mit einem Targadachsystem ausgerüstetes Fahrzeug.

Targadachsysteme bilden eine Zwischenlösung zwischen Schiebedächern und vollständigen Cabrios. Bei Schiebedächern ist lediglich ein Teil des Daches in einen anderen Teil bewegbar, so dass über den Fahrgastraum innerhalb des Daches eine Öffnung entsteht. Bei Cabriolets ist der gesamte Dachbereich vom Oberrand des Windschutzscheibenrahmens nach hinten einschließlich der Heckscheibe öffenbar. Bei einem Targadach ist ein Dachteil, das sich zwischen dem Oberrand einer Windschutzscheibe bzw. dem Windschutzscheibenrahmen und einem im Abstand davon angeordneten, den Fahrzeuginnenraum quer überspannenden Querholm abnehmbar, wobei dieses Dachteil im Allgemeinen verhältnismäßig flach ist, so dass es unter der Heckklappe oder im Fahrzeuginnenraum, beispielsweise hinter dem Fahrer/Beifahrersitz, verstaubar ist.

Aus der DE 100 32 378 C2 ist ein bezüglich der Funktionalität einem Cabriodach entsprechendes Fahrzeugdach bekannt, bei dem ein Dachvorderteil und ein ein Heckfenster enthaltendes Dachhinterteil an der Karosserie bewegbar gelagert und in einem Ablageraum hinter dem Fahrer/Beifahrersitz ablegbar sind. Das Dachvorderteil ist mittels einer an einer fahrzeugfesten Führungseinrichtung verschiebbar gelagerten Schwenklagereinrichtung gelagert, die sich beim Öffnen und Ablegen des Dachvorderteils entlang der Führungseinrichtung bewegt und dabei das Dachvorderteil in den Dachablageraum absenkt. Die Schwenklagereinrichtung ist als ein Mehrgelenkmechanismus ausgebildet, der an der Führungseinrichtung insgesamt verschiebbar gelagert ist. Eine Eigenart des bekannten Fahrzeugdaches ist sein verhältnismäßig komplizierter Aufbau. Des weiteren muß das Dachteil bei seinem Absenken sorgfältig von Hand geführt werden, da es wegen des Mehrgelenkmechanismus relativ zu der fahrzeugfesten Führungseinrichtung verschwenkbar ist und dadurch bei nicht sorgfältiger Handhabung verkratzen kann.

In der DE 101 26 974 C1 ist ein Targadachsystem beschrieben, bei dem ein Dachteil aus einer den Fahrzeuginnenraum überdeckenden Schließstellung in eine Ablagestellung bewegbar ist, wobei die Bewegung von einer Verstelleinrichtung geführt wird. Die Verstelleinrichtung weist an jeder Seite des Fahrzeugs eine vordere Führungsschiene und eine hintere Führungsschiene auf, an denen das Dachteil verschiebbar und verschwenkbar gelagert und in den Dachablageraum bewegbar ist. Das Dachteil ist an den hinteren Führungsschienen mittels eines Dreh-Gleitlagers und an den vorderen Führungsschienen mittels je einer Zwischengelenkeinrichtung schwenkbar gelagert, die an der vorderen Führungsschiene verschiebbar gelagert und mit dem Dachteil in einem vorderen Drehgelenk verbunden ist.

Weitere ähnliche Systeme sind in EP 0261379 und DE 10032378 offenbart.

Der Erfindung liegt die Aufgabe zugrunde, ein in seinem Aufbau einfaches und bequem handhabbares Targadachsystem für ein Fahrzeug zu schaffen.

Diese Aufgabe wird mit den Merkmalen des Anspruchs 1 gelöst.

Durch die erfindungsgemäß vorgesehen, an beiden Seiten des Dachteils in dessen hinterem Bereich im gegenseitigen Abstand starr angebrachten Führungselemente wird erreicht, dass das Dachteil bei seinem Absenken längs der Führungsschienen relativ zu den Führungsschienen nicht verschwenkbar ist, so dass es sicher und bequem abgesenkt und verstaut werden kann.

Die Unteransprüche 2 bis 6 sind auf vorteilhafte Weiterbildungen und Ausführungsformen des erfindungsgemäßen Targadachsystems gerichtet.

Die Ansprüche 7 und 8 kennzeichnen ein mit einem erfindungsgemäßen Targadachsystem ausgerüstetes Fahrzeug.

Die Erfindung wird im Folgenden anhand schematischer Zeichnungen beispielsweise und mit weiteren Einzelheiten erläutert.

In den Zeichnungen stellen dar:
- Fig. 1: eine Seitenansicht, teilweise im Schnitt, eines erfindungsgemäßen Targadachsystems,
- Fig. 2: einen Ausschnitt aus der Fig. 1 mit angehobenem Dachteil,
- Fig. 3 bis 6: Detailansichten der Fig. 1 in verschiedenen Stellungen des Dachteils,
- Fig. 7: eine Ansicht ähnlich der Fig. 1 bei vollständig angehobenem Dachteil,
- Fig. 8: die Ansicht der Fig. 7 bei halb abgesenktem Dachteil,
- Fig. 9: die Ansicht der Fig. 7 bei vollständig abgesenktem Dachteil,
- Fig. 10: die Ansicht der Fig. 9 bei vollständig abgesenktem und in eine Ablagestellung verschwenktem Dachteil und
- Fig. 11: eine Detailansicht der Fig. 10.

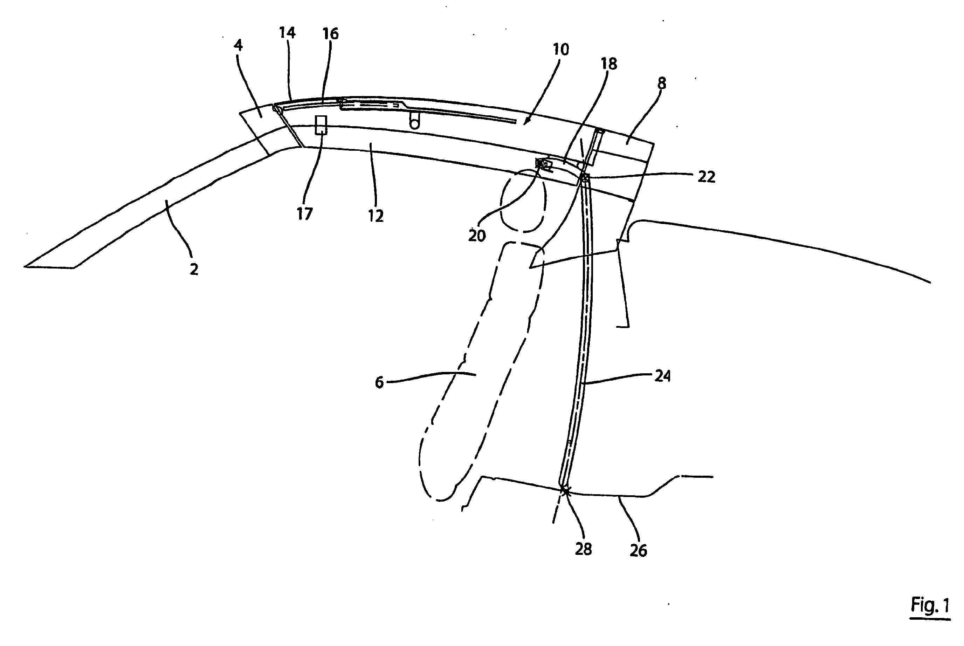

Gem. Fig. 1, die eine schematische Seitenansicht, teilweise im Schnitt, auf einen Ausschnitt eines mit einem Targadachsystem ausgerüsteten Fahrzeugs zeigt, ist eine nicht sichtbare Windschutzscheibe in einem Scheibenrahmen gehalten, dessen linker Seitenpfosten 2 und dessen oberer Querträger 4 sichtbar sind.

Im Bereich der oder hinter der Sitzlehne 6 eines Fahrer- und Beifahrersitzes ist karosseriefest ein Querholm 8 angeordnet, der im Allgemeinen ein Strukturbauteil der Karosserie bildet.

Vom Querträger 4 des Windschutzscheibenrahmes zum Querholm 8 erstreckt sich ein flächiges Dachteil 10, das seitlich an Längsholme 12 anschließt, die die Seitenpfosten 2 bzw. den Querträger 4 mit dem Querholm 8 verbinden.

In seinem mittleren Bereich ist der vordere Bereich des Dachteils 10 als durchsichtiger Bereich 14, beispielsweise aus Verbundglas oder Plexiglas, ausgebildet. Zum Abschatten des durchsichtigen Bereiches 14 ist in an sich bekannter Weise eine Schiebetafel 16 in das Dachteil 10 versenkbar.

Zur Verriegelung des Dachteils 10 am Fahrzeug ist ein an sich bekannter, beispielsweise von einem einzigen Handgriff 17 aus bedienbarer Verriegelungsmechanismus vorgesehen, der das Dachteil 10 am Querträger 4 sowie ggf. am Querholm 8 und den Längsholmen 12 verriegelt.

Am hinteren Bereich des Dachteils 10 ist an beiden Seiten je eine Konsole 18 starr befestigt, die je ein vorderes Führungselement 20 und ein hinteres Führungselement 22 aufweist, die gem. Fig. 1 etwa in Längsrichtung des Fahrzeuges bzw. der Erstreckungsrichtung des Dachteils 10 voneinander beabstandet sind.

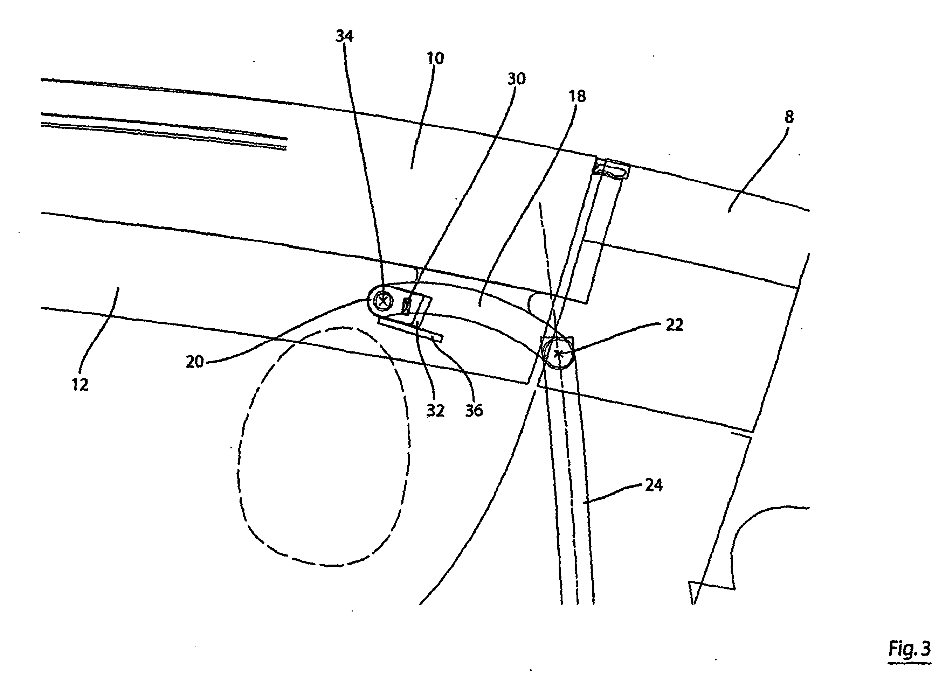

Das hintere Führungselement 22 ragt in eine Führungsschiene 24 ein, die im Fahrzeuginnenraum seitlich an der Karosserie in der Nähe des Fahrzeugbodens 26 im Gelenk 28 schwenkbar angelenkt ist. Das vordere Führungselement 20 ist als ein Schlitten ausgebildet, der mittels einer Verriegelung 30 in der Stellung gem. Fig. 1 unverschiebbar an einem Schienenstück 32 gehalten ist, das um eine Achse 34 schwenkbar am Längsholm 12 befestigt ist (genauere Darstellung siehe Fig. 3 bis 6).

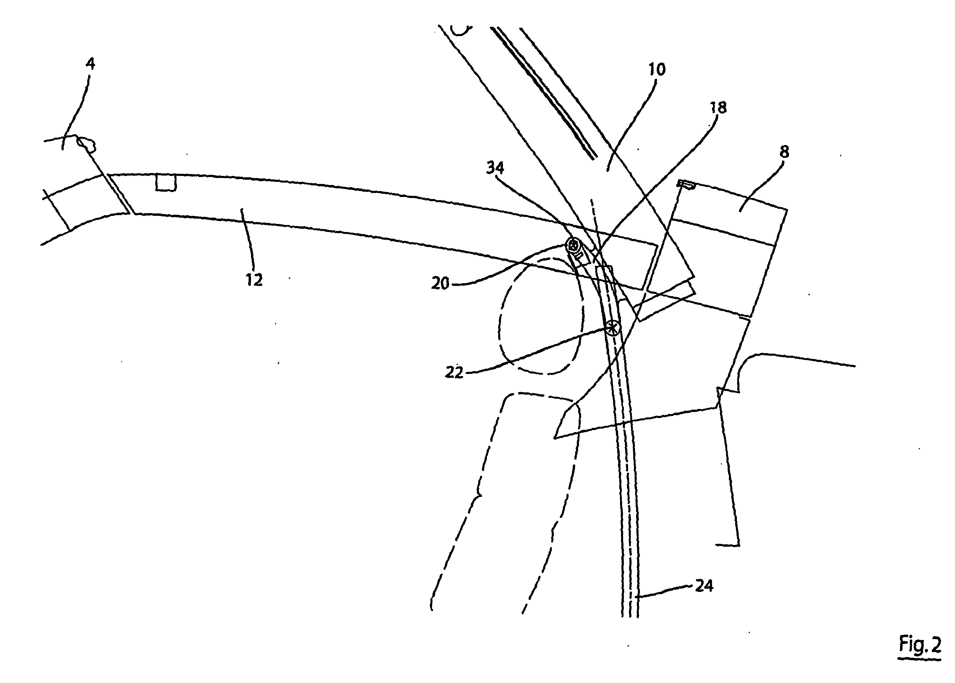

Fig. 2 zeigt einen Ausschnitt der Anordnung gem. Fig. 1 bei mittels des Handgriffs 17 gelöster Verriegelung und aufwärts geklapptem Dachteil 10. Wie ersichtlich, ist das Dachteil 10 um die Achse 34 herum hochgeklappt. Beim Hochklappen des Dachteils um die Achse 34 herum verschwenkt das an dem Längsholm 12 gelagerte Schienenstück 32 zusammen mit dem an ihm verriegelten konsolenfesten schlittenförmigen Führungselement 20 in Uhrzeigerrichtung. Dabei gleitet das Führungselement 22 in der Führungsschiene 24 unter gleichzeitigem Verschwenken der Führungsschiene in Gegenuhrzeigerrichtung um das Gelenk 28 herum abwärts, bis die Führungsschiene 24 in Anlage an ein Anschlagteil 36 kommt, das von dem Schienenstück 32 vorsteht.

Fig. 3 zeigt die Ausbildung der Konsole 18 mit den Führungselementen 20 und 22 genauer. Das Dachteil 10 ist in seiner geschlossenen Stellung.

Das Führungselement 22 ist innerhalb der Führungsschiene 24 verschiebbar aufgenommen, wobei eine Sicherung dafür, dass das Führungselement 22 nicht nach oben aus der Führungsschiene 24 herausbewegbar ist, nicht erforderlich ist, da die Bewegbarkeit des Dachteils 10 nach oben durch dessen Anlage an der Innenseite des Querholms 8 begrenzt ist.

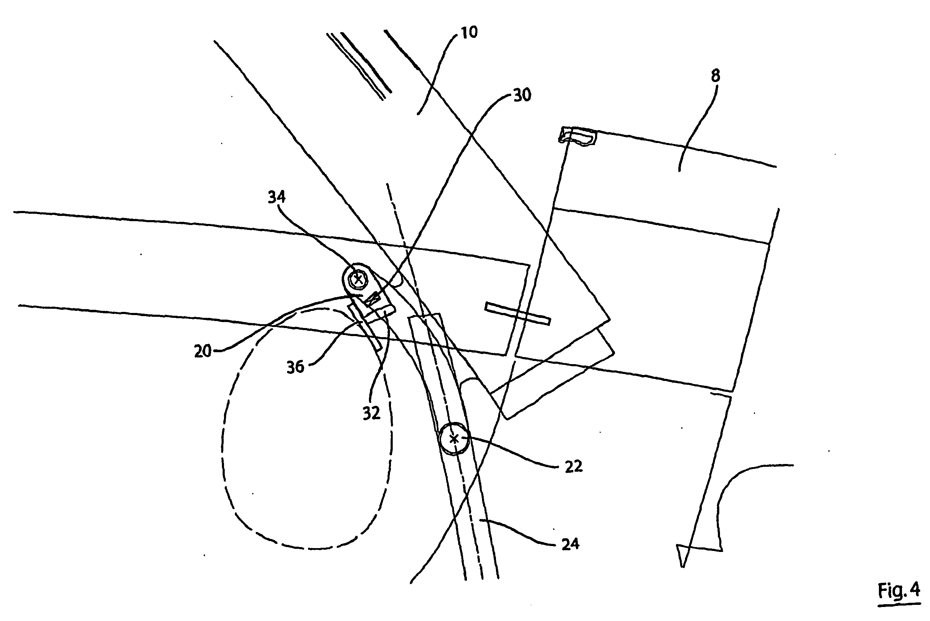

Fig. 4 zeigt das Dachteil 10 etwa in der Stellung gem. Fig. 2, jedoch in vergrößertem Maßstab. Wie ersichtlich, ist das Dachteil 10 bereits etwas abgesenkt, so dass das Führungselement 22 sich in der Führungsschiene 24 abwärts bewegt hat und die Führungsschiene 24 in Gegenuhrzeigerrichtung verschwenkt ist..

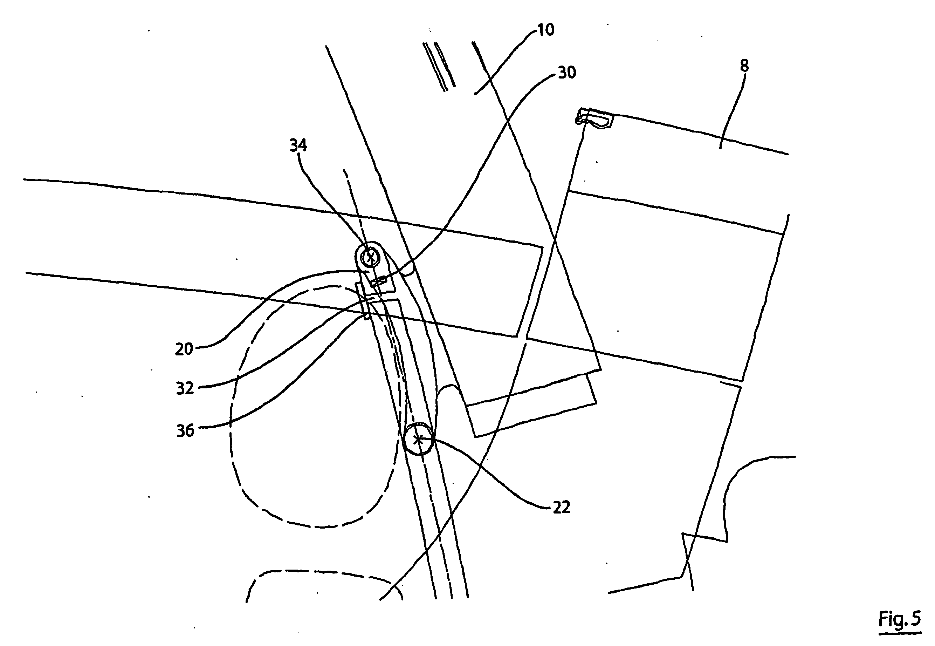

Fig. 5 zeigt die Anordnung gem. Fig. 4 in weiter hochgeklappter Stellung des Dachteils 10, wobei in der Stellung gem. Fig. 5 das Anschlagteil 36 an der Führungsschiene 24 anliegt, so dass die Führungsschiene 24 zum Schienenstück 32 ausgerichtet ist und ein weiteres Hochklappen des Dachteils 10 nicht möglich ist. Mit Hilfe der Verriegelung 30 wird in diesem Zustand das Schienenstück 32 mit der Führungsschiene 24 verriegelt und gleichzeitig die Verschiebbarkeit des Führungselements 20 an der Führungsschiene 24 freigegeben, so dass sich das Führungselement 20 aus dem Schienenstück 32 heraus in die Führungsschiene 24 hineinbewegen kann.

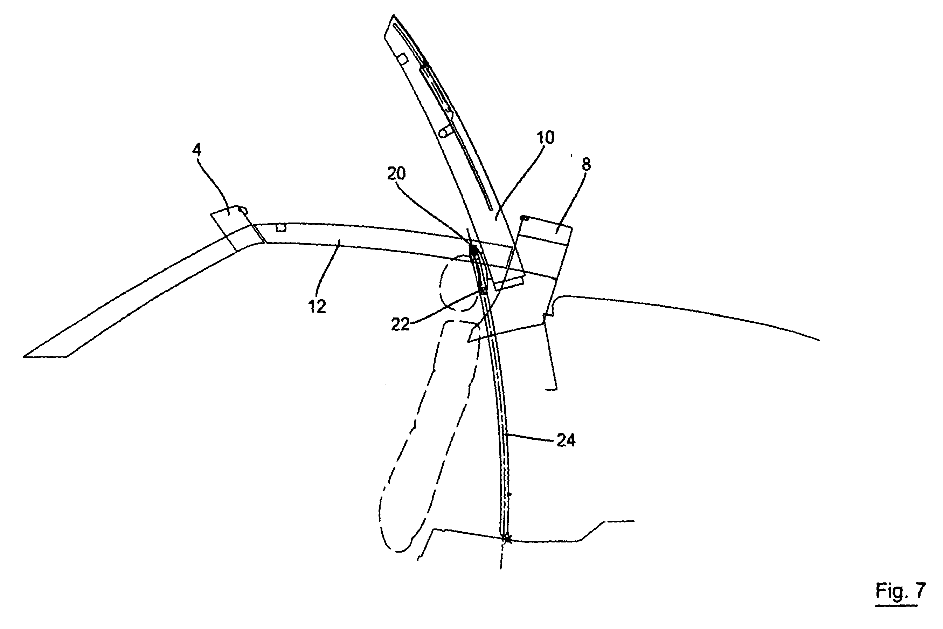

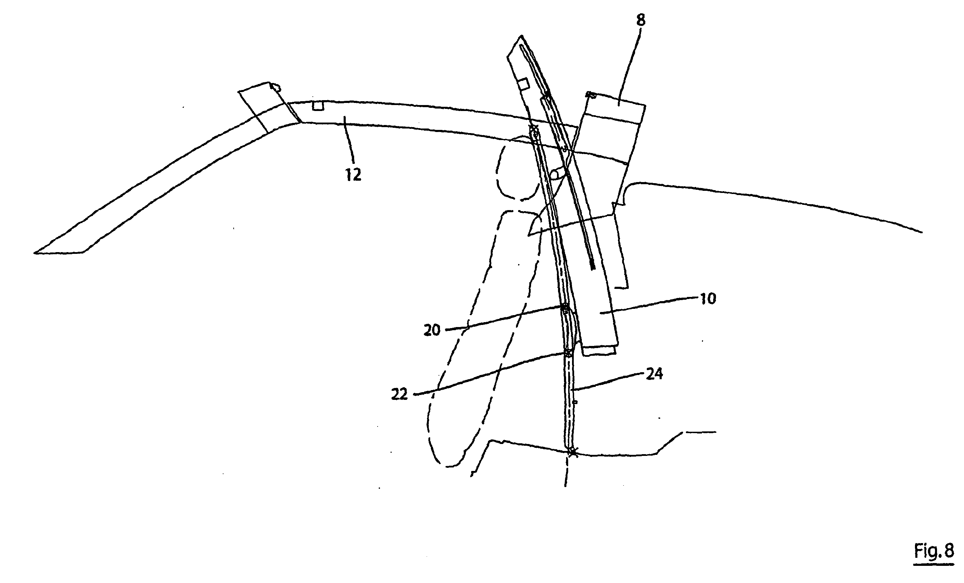

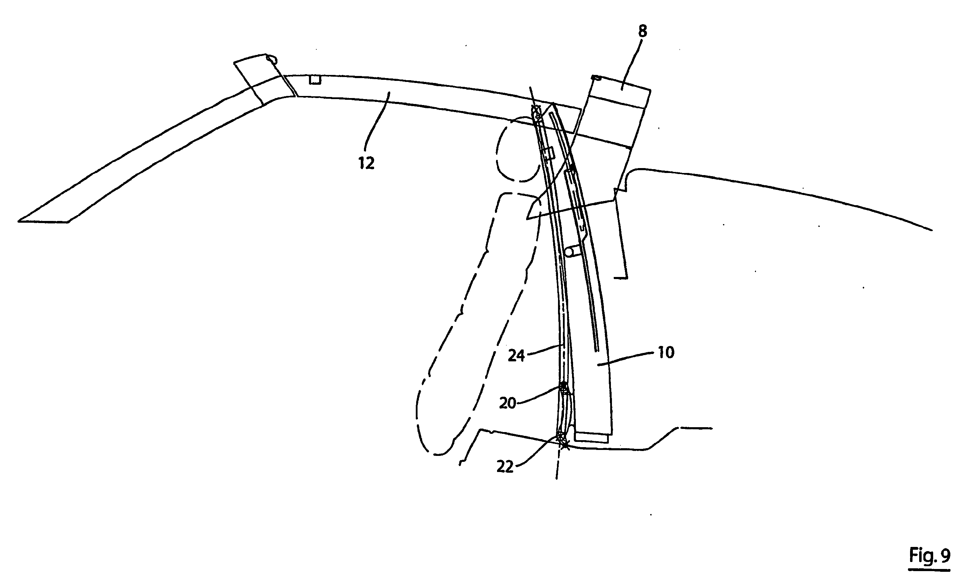

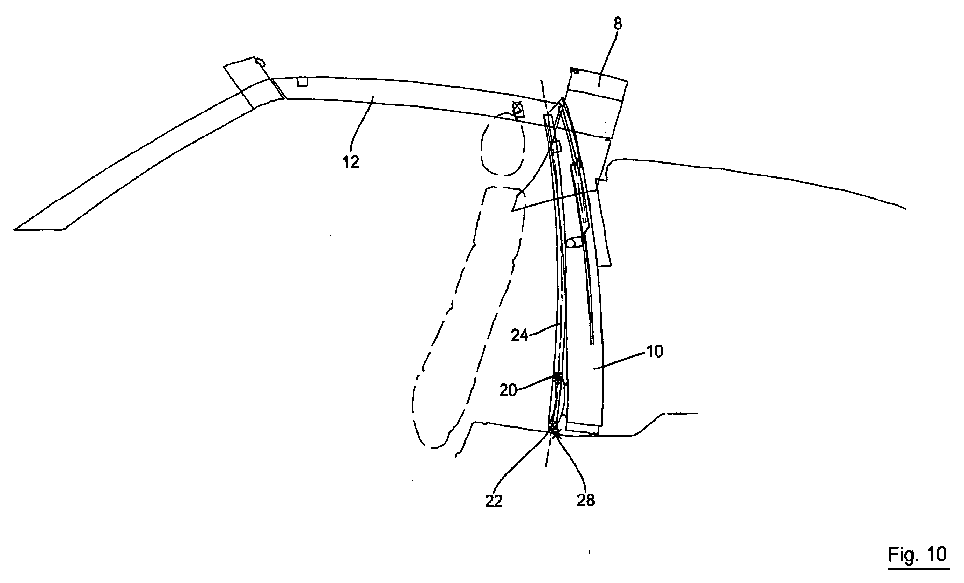

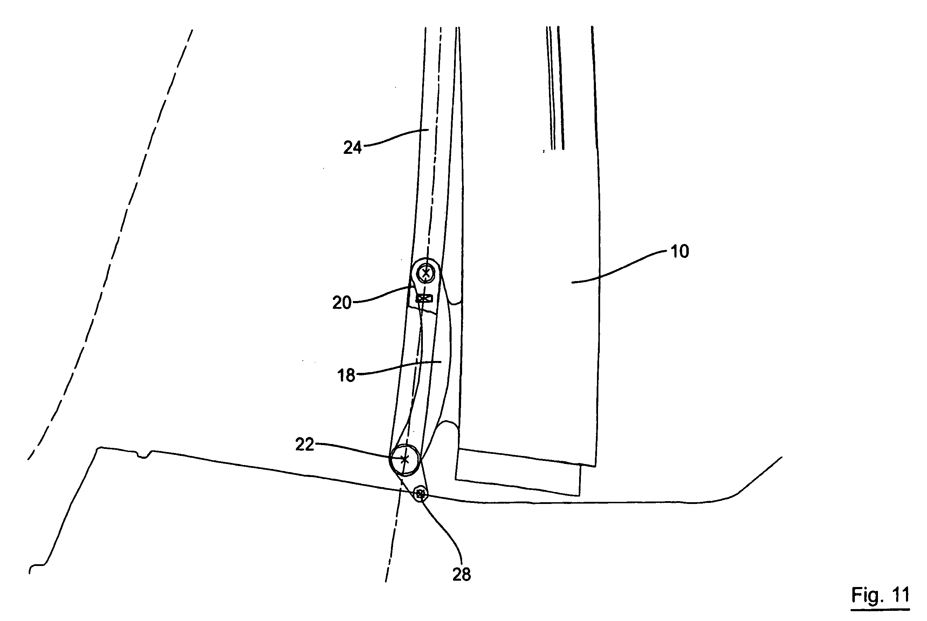

Ab dem Zustand, in dem das Schienenstück 32 mit der Führungsschiene 24 verriegelt ist, kann das Dachteil 10 relativ zu der Führungsschiene 24 nicht mehr verkippt werden, da es über die Führungselemente 20 und 22 verkippungssicher an der Führungsschiene 24 gehalten ist. Das Dachteil 10 kann nun wohl definiert längs der Führungsschiene aus der Stellung gem. Fig. 7 über die Stellung gem. Fig. 8 abgesenkt werden, bis das Führungselement 22 an einem Anschlag am unteren Ende der Führungsschiene 24 anliegt (Fig. 9). In dieser Staustellung hat sich das Dachteil 10 bis unterhalb des Querholms 8 in den Fahrzeuginnenraum bewegt, so dass es zusammen mit der Führungsschiene 24 um deren Gelenk 28 (Detailansicht in Fig. 11) in Uhrzeigerrichtung in eine Ablagestellung gem. Fig. 10 verkippt werden kann, in der der Raum hinter den Sitzlehnen 6 durch das Dachteil 10 nur minimal eingeschränkt ist.

Die Verriegelung der Stellung der Führungsschienen zwischen dem Schienenstück 32 und der Führungsschiene 24 kann automatisch gelöst werden, wenn das Dachteil in seine Staustellung gem. Fig. 9 gelangt, oder kann manuell entriegelbar sein.

Die Ablagestellung gem. Fig. 10 kann über den am Dachteil vorgesehenen Handgriff 17 verriegelt werden, der bequem zugänglich ist. Dabei können seitliche Bolzen aus dem Dachteil ausfahren und in entsprechende Ausnehmungen im Querholm 8 eingreifen. Alternativ kann die Verriegelung auch mit der Verriegelung 30 erfolgen.

Die Längsholme 12 können, wenn sich das Dachteil in seiner Ablagestellung gem. Fig. 10 befindet, herausgenommen werden, so dass der Raum über den Fahrgastraum nur durch den Scheibenquerträger 4 und den Querholm 8 begrenzt ist.

Wenn sich das Dachteil 14 in seiner Ablagestellung gem. Fig. 10 befindet, ist ein Blick nach hinten im mittleren Bereich des Innenraums in Folge des durchsichtigen Bereiches 14 des Dachteils 10 möglich, so dass die Sicht nach hinten durch ein nicht dargestelltes, im Querholm 8 untergebrachtes Rückfenster durch das Dachteil 10 nicht eingeschränkt ist. Insbesondere ist der Blick durch einen Innenrückblickspiegel nach hinten nicht eingeschränkt.

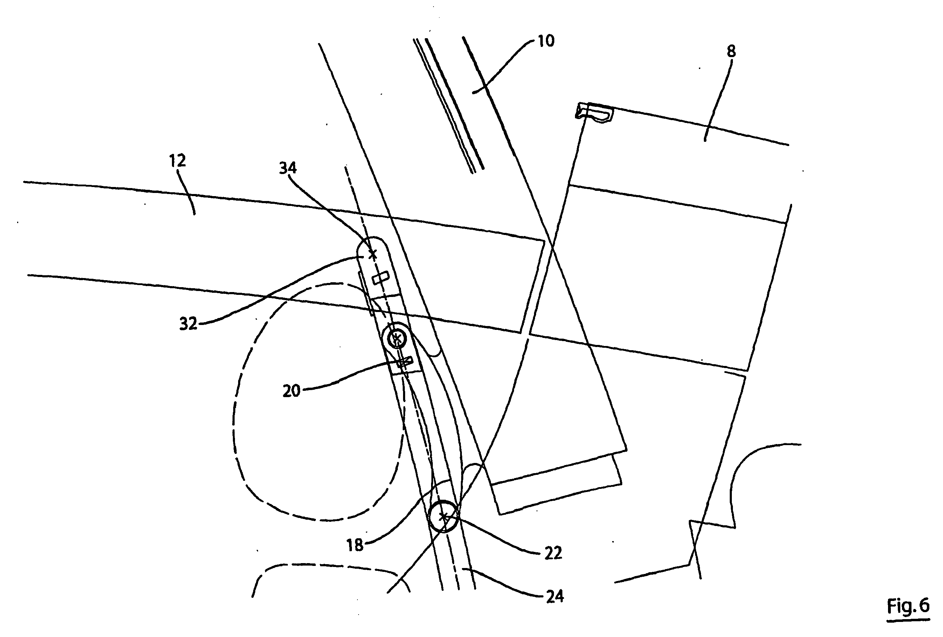

Zum Schließen des Daches laufen die Vorgänge in umgekehrter Reihenfolge ab. Die Seitenholme 12 werden eingesetzt. Das Dachteil wird zusammen mit den Führungsschienen aus der Ablagestellung gem. Fig. 10 in die Staustellung gem. Fig. 9 nach vorne geschwenkt, wobei die Endstellung wiederum durch Verriegelung zwischen dem Schienenstück 32 und der Führungsschiene 24 gesperrt wird. Das Dachteil 10 wird dann aufwärts in die Stellung gem. Fig. 6 verschoben, wobei die Bewegung des Dachteils durch die Führungsschienen 24 geführt und kippsicher erfolgt und das Dachteil dann, wenn es vollständig in die Stellung gem. Fig. 5 angehoben ist, unter weiterem Anheben nach vorne verschwenkt werden kann und in der geschlossenen Stellung verriegelt wird.

Die beschriebene Vorrichtung kann in vielfältiger Weise abgeändert werden.

Beispielsweise können die Führungselemente 20 und 22 lediglich durch zwei an der Konsole 18 starr befestigte seitliche Bolzen gebildet sein, wobei der hintere Bolzen (Führungselement 22) ständig in der Führungsschiene 24 aufgenommen ist, und der vordere Bolzen (Führungselement 20) in einer Führungsnut aufgenommen ist, die in dem Längsholm 12 derart ausgebildet ist, dass der vordere Führungsbolzen aus der Führungsnut nur herausbewegbar ist, wenn er in Richtung der Führungsschiene 24 gem. Fig. 5 ausgerichtet ist. Das Anschlagteil 36 kann dann unmittelbar durch eine Wand der Nut gebildet sein. In diesem Fall kann das an dem Längsholm gelagerte Schienenstück entfallen.

Für die einzelnen Verriegelungen sind unterschiedlichste automatisch über Endschalter betätigte Vorrichtungen oder manuell betätigte Vorrichtungen einsetzbar.

In einer abgeänderten Ausführungsform kann das obere Ende der Führungsschiene 24 derart ausgebildet sein, dass das Führungselement 22 in der Stellung gem. Fig. 3 aus der Führungsschiene 24 frei kommt, so dass die Führungsschiene 24 in Uhrzeigerrichtung weiter nach hinten in eine Stellung verschwenkbar ist, in der sie möglichst weit hinten in dem Querholm 8 aufgenommen ist.

In einer vereinfachten Ausführungsform sind die Führungsschienen 24 nicht verschwenkbar. Das dachfeste Führungselement 22 ist in seiner obersten Stellung in der Führungsschiene 24 verriegelt und bildet ein Gelenk, um das das Dachteil 10 aufwärts schwenkbar ist. Dabei bewegt sich das Führungselement 20 nach oben aus einer Führungsnut des Längsholms 12 heraus und ist anschließend zusammen mit dem Führungselement 22 absenkbar, wobei es von oben her in die Führungsschiene 24 eingeschoben wird. Auch bei einer solchen vereinfachten Ausführungsform, bei die konstruktive Freiheit bei der Gestaltung des Übergangs zwischen dem hinteren Ende des Dachteils 10 und Querholm 8 eingeschränkt ist, ist ein verkippsicheres Absenken des Dachteils 10 möglich. Bei einer solchen Ausführungsform kann der Querholm 8 teilweise aufklappbar sein, um Platz für das beim Hochklappen nach hinten wandernde Dachteil zu schaffen.

Die Längsholme 12 können integral Bestandteile des Dachteils 10 sein. Die Führungselemente 20 treten dann erst in Funktion, wenn sie nach Hochklappen des Dachteils 10 in die Führungsschienen 24 hineinbewegt werden. Insgesamt ist mit der Erfindung ein Targadach geschaffen, das lediglich durch Betätigung des Handgriffs 17 aus der Schließstellung in die Ablagestellung und umgekehrt bewegbar ist, wobei dafür lediglich eine Hand erforderlich ist.

### Bezugszeichenliste

- 2: Seitenpfosten
- 4: Querträger
- 6: Sitzlehne
- 8: Querholm
- 10: Dachteil
- 12: Längsholm
- 14: durchsichtiger Bereich
- 16: Schiebetafel
- 17: Handgriff
- 18: Konsole
- 20: Führungselement
- 22: Führungselement
- 24: Führungsschiene
- 26: Boden
- 28: Gelenk
- 30: Verriegelung
- 32: Schienenstück
- 34: Achse
- 36: Anschlagteil

## Patentansprüche

1. Targadachsystem für ein Fahrzeug, enthaltend ein Dachteil (10) zum Überspannen eines Raumes zwischen einem den Oberrand einer Windschutzscheibe aufnehmenden Querträger (4) und einem im Abstand von dem Querträger einen Fahrzeuginnenraum quer überspannenden Querholm (8), zwei an je einer Fahrzeugseite im Bereich unterhalb des Querholms (8) anordenbare, vom Dach zum Fahrzeugboden verlaufende Führungsschienen (24) und eine an jeder Seite des Dachteils (10) in dessen hinterem Bereich angeordnete Konsole (18), die ein Aufwärtsschwenken des Dachteils um dessen hinteren Bereich und anschließendes Absenken in den Fahrzeuginnenraum unter Gleiten der Konsolen (18) längs der Führungsschienen ermöglichen, **dadurch gekennzeichnet, dass**
jede Konsole (18) zwei im hinteren Bereich des Dachteils (10) starr an ihm befestigte Führungselemente (20, 22) aufweist, die in Längsrichtung des Dachteils voneinander beabstandet sind, so dass das Dachteil aus seiner Schließstellung um je zwei der sich bezogen auf die Fahrzeugbreite gegenüberliegenden Führungselemente (20, 22) herum schwenkbar und anschließend durch die vorderen Führungselemente (20) und die hinteren Führungselemente (22) geführt längs der Führungsschienen (24) relativ zu diesen unverschwenkbar abwärts in eine Staustellung absenkbar ist.

2. Targadachsystem nach Anspruch 1, **dadurch gekennzeichnet, dass**
die vorderen Führungselemente (20) zum Verschwenken des Dachteils (10) an fahrzeugfesten seitlichen Längsholmen um eine Achse (34) verschwenkbar gelagert sind, so dass sich beim Hochschwenken des Dachteils (10) die hinteren Führungselemente (22) unter Verschwenken der Führungsschienen (24) um deren Anlenkung (28) im Bodenbereich des Fahrzeuges in den Führungsschienen (24) abwärts bewegen.

3. Targadachsystem nach Anspruch 2, **dadurch gekennzeichnet, dass**
an den Seitenholmen Schienenstücke (32) um die Achse (34) verschwenkbar gelagert sind, auf denen die vorderen Führungselemente (20) verschiebbar und verriegelbar gehalten sind.

4. Targadachsystem nach Anspruch 3, **dadurch gekennzeichnet, dass** die Schienenstücke (32) bei vollständig hochgeklappten Dachteil (10) in eine ausgerichtete Anschlaglage mit den Führungsschienen (24) kommen, so dass die Führungselemente (20) aus den Schienenstücken (32) heraus und in die Führungsschienen (24) hinein bewegbar sind.

5. Targadachsystem nach einem der Ansprüche 1 bis 4, **dadurch gekennzeichnet, dass** die Führungsschienen (24) bei in Staustellung abgesenktem Dachteil (10) gemeinsam mit dem Dachteil in eine Ablagestellung verschwenkbar sind.

6. Targadachsystem nach einem der Ansprüche 1 bis 5, **dadurch gekennzeichnet, dass** das Dachteil (10) in einem vorderen Bereich (14) durchsichtig ist.

7. Fahrzeug **dadurch gekennzeichnet, dass** es ein Dachsystem nach einem der Ansprüche 1 bis 6 enthält.

8. Fahrzeug nach Anspruch 7, **dadurch gekennzeichnet, dass**
beidseitig des Dachteils (10) verlaufende Längsholme (12) nach Öffnen des Dachteils (10) abnehmbar sind.

## Claims

1. Targa roof system for a vehicle, including
a roof part (10) for spanning a space between a cross member (4), which includes the upper edge of a windscreen, and a transverse cross beam (8), which transversely spans a vehicle inner compartment and is spaced from the cross member (4), two guide rails (24) extending from the roof to the vehicle floor, each being disposable on a side of the vehicle in the area underneath the transverse cross beam (8), and a bracket (18) disposed on each side of the roof part (10) in the rear area thereof, the brackets (18) facilitating an upward pivoting of the roof part about its rear area and subsequently a lowering into the vehicle inner compartment by sliding of the brackets along the guide rails, **characterized in that**:
each bracket (18) includes two guide elements (20, 22) fixedly attached in the rear area of the roof part (10), the guide elements being spaced from each other in the longitudinal direction of the roof part, so that the roof part is pivotable from its closed position about each of the two guide elements (20, 22), which oppose each other with reference to the vehicle width, and subsequently is lowerable guided along the guide rails (24) downwardly into a stowed position by means of the forward guide element (20) and the rear guide element (22) without pivoting relative to the guide rails.

2. Targa roof system according to claim 1, **characterized in that**
the forward guide elements (20) are pivotably borne at an axis (34) on lateral transverse cross beams, which are affixed to the vehicle, for pivoting the roof part (10), so that when the roof part (10) is upwardly pivoted, the rear guide elements (22) move downwardly in the guide rails (24) by pivoting of the guide rails (24) about their linkage (28) in the floor area of the vehicle.

3. Targa roof system according to claim 2, **characterized in that**
rail pieces (32) are pivotably borne at the axis (34) on the lateral beams, the forward guide elements (20) being slidably and latchable held on the rail pieces.

4. Targa roof system according to claim 3, **characterized in that** the guide pieces (32) come into an aligned abutment state with the guide rails (24) when the roof part (10) is fully upwardly tilted, so that the guide elements (20) are movable away from the guide pieces (32) and into the guide rails (24).

5. Targa roof system according to one of claims 1 to 4, **characterized in that**
the guide rails (24) are pivotable together with the roof part (10) into an abutment position when the roof part (10) has been lowered into the stowed position.

6. Targa roof system according to one of claims 1 to 5, **characterized in that**
the roof part (10) is transparent in a forward area (14).

7. Vehicle **characterized in that**
it includes a roof system according to one of claims 1 to 6.

8. Vehicle according to claim 7, **characterized in that**:
transverse cross beams (12) extending on both sides of the roof part (10) are removable after opening of the roof part (10).

## Revendications

1. Système de toit Targa pour un véhicule comportant une partie de toit (10) pour couvrir le volume entre une traverse (4) recevant le bord supérieur d'un pare-brise et un arceau (8) couvrant transversalement l'habitacle du véhicule à une certaine distance de la traverse, avec deux rails de guidage (24) prévus chacun sur un côté du véhicule dans la zone sous l'arceau (8), allant du toit au plancher du véhicule ainsi qu'une console (18) sur chaque côté de la partie de toit (10), dans sa zone arrière, ces consoles permettant le relevage de la partie du toit autour de sa zone arrière et ensuite sa descente dans l'habitacle du véhicule par glissement des cosoles (18) le long des rails de guidage,
**caractérisé en ce que** ,
chaque console (18) comporte deux éléments de guidage (20, 22) prévus dans la zone arrière de la partie de toit (10), et fixés rigidement à celle-ci, ces éléments de guidage étant distants l'un de l'autre dans la direction longitudinale de la partie de toit pour que la partie de toit puisse pivoter à partir de sa position de fermeture autour de chaque fois deux éléments de guidage (20, 22) opposés dans le sens de la largeur du véhicule et ensuite être guidée par les élément de guidage avant (20) et les éléments de guidage arrière (22) le long des rails de guidage (24) par rapport à ceux-ci, de manière non pivotante, pour descendre dans une position de rangement.

2. Système de toit Targa selon la revendication 1,
**caractérisé en ce que**
les éléments de guidage avant (20) sont montés pivotant autour d'un axe (34) pour pivoter la partie de toit (10) sur les longerons longitudinaux latéraux solidaires du véhicule, pour que lorsqu'on relève par basculement la partie de toit (10), les éléments de guidage arrière (22), par pivotement des rails de guidage (24) autour de leur articulation (28), descendent dans les rails de guidage (24) jusqu'au niveau du plancher du véhicule.

3. Système de toit Targa selon la revendication 2,
**caractérisé en ce que**
les longerons latéraux portent des éléments de rail (32) pivotant autour de l'axe (34) et sur lesquels les éléments de guidage avant (20) sont tenus coulissant et verrouillables.

4. Système de toit Targa selon la revendication 3,
**caractérisé en ce que**
lorsque la partie de toit (10) est complètement relevée, les éléments de rail (32) arrivent en position d'appui, alignés sur les rails de guidage (24) pour que les éléments de guidage (20) puissent être sortis des éléments de rail (32) et passer dans les rails de guidage (24).

5. Système de toit Targa selon l'une quelconque des revendications 1 à 4,
**caractérisé en ce que**
lorsque la partie de toit (10) est descendue en position de rangement, les rails de guidage (24) pivotent en commun avec la partie de toit dans une position de rangement.

6. Système de toit Targa selon l'une quelconque des revendications 1 à 5,
**caractérisé en ce que**
la zone avant (14) de la partie de toit (10) est transparente.

7. Véhicule **caractérisé en ce qu'**il est équipé d'un système de toit selon l'une quelconque des revendications 1 à 6,

8. Véhicule selon la revendication 7,
**caractérisé par**
des longerons (12) situés des deux côtés de la partie de toit (10) et qui s'enlèvent après ouverture de la partie de toit (10).
